# EUROPÄISCHE PATENTANMELDUNG

(11) **EP 0 720 860 A1**
(43) Veröffentlichungstag der Anmeldung: **10.07.1996**
(21) Anmeldenummer: 95120404.9
(22) Anmeldetag: 22.12.1995
(51) Int. Cl.: B01D 17/02, E03F 5/16

(54) **Abscheider für in Abwasser dispergierte Leichtflüssigkeiten**

(30) Priorität: 03.01.1995 DE 29500038 U
(71) Anmelder: PASSAVANT-WERKE AG, D-65322 Aarbergen (DE)
(72) Erfinder: Baar, Norbert, D-65329 Hohenstein-Holzhausen (DE); Dambmann, Willi, D-66558 Gückingen (DE)

(57) **Zusammenfassung**

Der neue Abscheider für in Wasser dispergierte Leichtflüssigkeiten, wie z.B. Öl, Benzin u.dgl., der einen dem Klarwasserauslauf vorgeordneten, insbesondere hohlzylinderförmigen Koaleszenzeinsatz aufweist, ist dadurch gekennzeichnet, daß der Koaleszenzeinsatz mindestens größtenteils aus stangen- oder rohrförmigen Füllkörpern solcher Länge besteht, daß sich eine Vielzahl von kleinsten Durchströmöffnungen ergibt. Dazu ist es vorteilhaft, wenn die rohrförmigen Füllkörper gitterförmig durchbrochen sind und/oder einen vom Kreis abweichenden Querschnitt haben. Die Anordnung dieser neuen Füllkörper ist einfacher als bei den bisher üblichen mattenförmigen Koaleszenzeinsätzen, die um einen Siebkäfig gewickelt und verspannt werden.

## Beschreibung

Die Erfindung bezieht sich aauf Abscheider für in Abwasser dispergierte Leichtflüssigkeiten, wie Benzin, Benzol, Öle u.dgl. Die DIN 1999 schreibt vor, daß Abwässer, die mit diesen Stoffen verschmutzt sind, durch Abscheider geleitet werden müssen, in denen die dispergierten Stoffe durch Aufschwimmen in Strömungstotzonen zurückgehalten werden. Für Leichtstoffe, die aufgrund ihrer Tröpfchengröße dort nicht abgetrennt werden können, werden Koaleszenzabscheider eingesetzt. Der dem Reinwasserauslauf vorgeordnete Koaleszenzeinsatz enthält kleinste Durchströmöffnungen, die auf die Dispersion Scherkräfte ausüben, die zur Koaleszenz der Dispersion zu aufstiegsfähigen Tropfen führen.

Bekannte Koaleszenzeinsätze bestehen aus retikuliertem Strukturschaum, der in Mattenzuschnitten auf Käfige aufgelegt oder zwischen Siebgitter eingebracht wird. es ist bekannt, daß die in Koaleszenzabscheidern zu reinigenden Abwässer auch feste Schmutzstoffe in kleinster Partikelgröße enthalten können. Diese Schmutzstoffe können, wenn sie in der Beruhigungszone vor dem Koaleszenzeinsatz nicht sedimentiert sind, sich in dem Koaleszenzeinsatz ablagern und Beruhigungszone vor dem Koaleszenzeinsatz nicht sedimentiert sind, sich in dem Koaleszenzeinsatz ablagern und diesen zunehmend verstopfen. Das führt zu einem zulaufseitigen Aufstau, der unerwünscht ist. Der Koaleszenzeinsatz muß deshalb bei Auftreten eines Staus freigespült werden.

Die Aufgabe, einen Koaleszenzeinsatz zu finden, bei dem solche Ablagerungen und Verstopfungen nicht auftreten, wird neuerungsgemäß dadurch gelöst, daß der Koaleszenzeinsatz mindestens größtenteils aus stangen- oder röhrenförmigen Füllkörpern mit einer Vielzahl von Durchströmöffnungen zusammengesetzt ist. Füllkörper dieser Ausgestaltung sind im Handel. Die Verwendung als Koaleszenzmaterial ist aber neu und vorteilhaft. Die neuerungsgemäßen Füllkörperröhren sind vorzugsweise über ihre ganze Länge und ihren ganzen Umfang gitterförmig durchbrochen. Ihre Außenkontur kann von der Kreisform abweichen und zB stern- oder strahlenförmig sein mit dem Ziel, die koaleszenzwirksame Anströmflache und die Zahl der Umlenkungen zu vergrößern. Die Füllkörperröhren bzw. -stangen werden in abstandsloser Packung zwischen sieb- oder gitterförmige Grenzflächen gefüllt und dann als einbaufertige Einheit in den Abscheider gesetzt. Ist der Koaleszenzeinsatz ein den Schwimmerverschluß umgebender Ringfilter, dann werden die Füllkörper um den Führungskäfig gelegt und mit Spannbändern oder einem Spannetz mit Klettverschluß zusammengehalten. Es können Füllkörperröhren mit in Durchströmrichtung abnehmender Lochgröße verwendet werden.

Die Abbildung zeigt in
- Fig. 1: eine perspektivische Ansicht einer neuerungsgemäß ausgebildeten Füllkörperröhre,
- Fig. 2: einen Schnitt durch den dem Reinwasserablauf vorgeordneten Ringfilter.

Von dem im freien Durchlauf betriebenen Koaleszenzabscheider ist nur der Auslaufbereich dargestellt. Dem Reinwasser-Auslaufkanal 1 ist an der Auslauföffnung 2 der Koaleszenzeinsatz 3 vorgeordnet. Er hat die Form eines Ringfilters, der radial von außen nach innen durchströmt wird. Im Innern des Ringfilters arbeitet der (nicht dargestellte) Schwimmerverschluß, der mit seinem Ventilteller bei Erreichen der zulässigen Speichermenge die Auslauföffnung verschließt.

Der Ringfilter besteht aus einem inneren Stabkäfig 4 mit oberem und unterem Flansch 5,6 und einer Handhabe 7. Auf den Stabkäfig sind in Umfangsrichtung gleichmäßig verteilt die Füllkörperröhren 8 aufgelegt und mit drei Spannbändern 9 mit Klettverschlüssen verspannt.

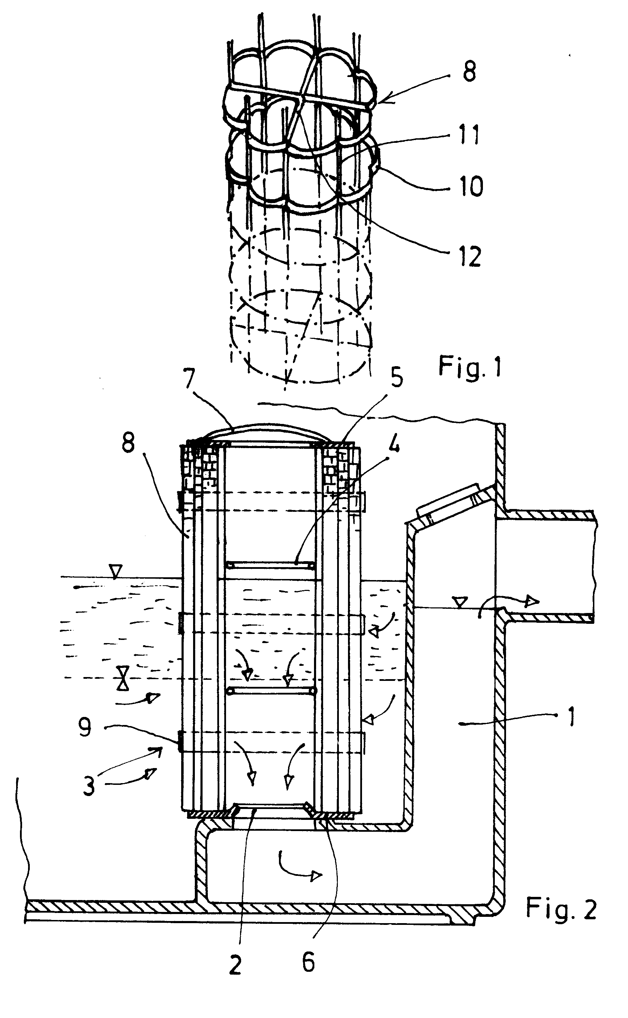

Jede Füllkörperröhre hat die in Fig. 1 gezeigte Form. Sternförmige Ringe 10 sind durch Längsstege 11 zu Röhren zusammengesetzt. Einige Ringe sind innen durch Speichenkreuze 12 versteift. Die Röhren können am Umfang Rücksprünge bekommen, mit denen sie auf die Ringe des Stabkäfigs zu liegen kommen. Auch zusammengehörende Haken und Ösen sind sinnvoll. Dadurch können die Röhren zu wickelbaren Flächen verkettet und die Flächen lagenweise verbunden werden. Bei quer in den Strömungsquerschnitt eingesetzten flächenhaften Koaleszenzeinrichtungen können die Röhren so zu starren Paketen zusammengesetzt werden, daß sich beiderseitige Grenzgitter erübrigen. Für das Ringfilter eignen sich passende Ringflansche mit Vor- oder Rücksprüngen zum stirnseitigen Aufstecken der Röhrenstücke.

## Patentansprüche

1. Abscheider für in Abwasser dispergierte Leichtflüssigkeiten, wie Benzin, Benzol` Öl u.dgl., enthaltend einen dem Reinwasserauslauf vorgeordneten und vom Abwasser durchströmten Koaleszenzeinsatz, **ddurch gekennzeichnet**, daß der Koaleszenzeinsatz (3) mindestens größtenteils aus stangen- oder röhrnenförmigen Füllkörpern (8) mit einer Vielzahl von kleinsten Durchströmöffnungen zusammengesetzt ist.

2. Abscheider nach Anspruch 1, **dadurch gekennzeichnet**, daß die Füllkörperröhren (8) gitterförmig durchbrochen ssind.

3. Abscheider nach Anspruch 1 oder 2, **dadurch gekennzeichnet**, daß der Querschnitt der Füllkörperröhren (8) vom Kreis abweichend und insbesondere stern- oder strahlenförmig ausgebildet ist.
